# EUROPEAN PATENT SPECIFICATION

(11) **EP 0 501 576 B1**
(45) Date of publication and mention of the grant of the patent: **28.04.1999**
(21) Application number: 92200515.2
(22) Date of filing: 21.02.1992
(51) Int. Cl.: C08G 67/02

(54) **Polymer preparation**
Polymerherstellung
Préparation de polymère

(30) Priority: 26.02.1991 NL 9100340
(43) Date of publication of application: 02.09.1992
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Keijsper, Johannes Jacobus, NL-1031 CM Amsterdam (NL)

(56) References cited:
- EP-A- 0 121 965
- EP-A- 0 245 893
- EP-A- 0 246 683
- EP-A- 0 248 483

## Description

The invention relates to a process for the preparation of polymers of carbon monoxide with one or more olefinically unsaturated compounds.

It is known that linear polymers of carbon monoxide with one or more olefinically unsaturated compounds in which polymers the units from carbon monoxide on the one hand and the units from the olefinically unsaturated compounds on the other hand are present in a substantially alternating arrangement, can be prepared by contacting the monomers at elevated temperature and pressure with a catalyst comprising:
a) a Group VIII metal compound,
b) an acid, and
c) a dentate ligand containing at least two phosphorus-, nitrogen-or sulphur-containing dentate groups through which the dentate ligand can complex with the Group VIII metal.

The preparation of the polymers using the above-mentioned catalysts was hitherto mainly carried out as liquid phase polymerization, i.e. the monomers were contacted with a solution of the catalyst in a liquid non-polymerizable diluent in which the polymers are insoluble or virtually insoluble. During the polymerization the polymers are obtained in the form of a suspension in the diluent. After reaching the required degree of polymerization, the polymerization is generally terminated by cooling and releasing the pressure. The polymers are isolated from the suspension, for example by filtration or centrifuging. The pure diluent to be used for a following polymerization is recovered from the remaining liquid, e.g. by distillation.

It is known from an earlier investigation by the applicant into the above-mentioned liquid phase polymerization that the polymerization activity of the catalysts is determined to a large extent by the nature of the acid contained therein as component b). It has been established that catalysts containing as component b) a strong organic acid such as para-toluenesulphonic acid or methylsulphonic acid, exhibit the highest polymerization activity in the above-mentioned liquid phase polymerization. In view of the above, it has hitherto been customary in liquid phase polymerization for the preparation of the present polymers to employ catalysts containing a strong organic acid as component b).

During further investigations by the applicant into the present polymer preparation, it was established that apart by liquid phase polymerization, it could also be carried out by gas phase polymerization. Gas phase polymerization is characterized in that the monomers are contacted with the catalyst substantially in the absence of a liquid non-polymerizable diluent. For the preparation of the polymers on an industrial scale, gas phase polymerization is much to be preferred to liquid phase polymerization on account of the fact that with gas phase polymerization the above-mentioned filtration or centrifuging step, as well as the distillation step, can be omitted. If implemented on an industrial scale, these separation and purification steps involve considerable expense.

The applicant has extensively researched the gas phase polymerization for the preparation of the present polymers using the above-mentioned catalysts. On the assumption that the same rules would apply to the optimum composition of the catalyst for gas phase polymerization as had previously been found for liquid phase polymerization, the catalysts initially used in the experimental programme for gas phase polymerization contained a strong organic acid as component b). The results were disappointing. Contrary to expectations, only low polymerization rates were observed.

Continued research into this subject has now shown that catalysts exhibiting a high activity in gas phase polymerization for the preparation of the present polymers can be obtained by incorporating in catalysts on the basis of components a) and c) a Lewis acid/Brönsted acid mixture as component b). Catalysts on the basis of a Group VIII metal compound, a Lewis acid/Brönsted acid mixture and an N- or S-dentate ligand as described under c) are novel compositions of matter.

The present patent application therefore relates to a process for the preparation of polymers of carbon monoxide with one or more olefinically unsaturated compounds, in which polymers the units from carbon monoxide and the units from the olefinically unsaturated compounds are present in a substantially alternating arrangement, which process comprises contacting the monomers at elevated temperature and pressure and substantially in the absence of a liquid non-polymerizable diluent with a catalyst comprising:
a) a Group VIII metal compound,
b) a Lewis acid/Brönsted acid mixture, and
c) a dentate ligand containing at least two phosphorus-, nitrogen- or sulphur-containing dentate groups whereby the dentate ligand can complex with the Group VIII metal.

To improve the behaviour of the catalysts, the gas phase polymerization according to the invention is preferably carried out in the presence of a small quantity of alcohol and/or hydrogen. In particular the lower aliphatic alcohols are very suitable as alcohols. The use of methanol is particularly preferred.

As regards the way in which, during the gas phase polymerization, the catalyst is presented to the monomer mixture to be polymerized, several different possibilities can be distinguished. Firstly, the catalyst as such, i.e. without carrier material, can be introduced into the polymerization reactor. If desired, the catalyst can be dissolved beforehand or suspended in a liquid diluent and, after the solution or suspension has been introduced into the reactor, for example by spraying, the diluent can be substantially removed. Preferably an alcohol, and in particular methanol, is used as diluent. If an alcohol is used, its removal is carried out such that a small quantity remains behind in the catalyst. The gas phase polymerization is preferably carried out using the catalyst deposited on a carrier material. The deposition of the catalyst on the carrier material can be accomplished very suitably by contacting the carrier material with a solution or suspension of the catalyst in a liquid diluent and then substantially removing the diluent. As diluents, preferably alcohols and in particular methanol are used. If an alcohol is used as diluent, its removal is preferably carried out such that a small quantity remains behind in the catalyst on the carrier. As carrier material, a porous carrier material is preferably chosen. Both inorganic and organic carrier materials are eligible as catalyst carrier materials. Examples of suitable carrier materials are silica, alumina, talc, charcoal, cellulose, dextrose and dextran gel. Polymers such as polyethylene, polypropylene and polystyrene can also be used as carrier materials. Carrying out the gas phase polymerization with the catalyst applied to a carrier material results in products in which the prepared polymer occurs together with the carrier material used. Depending on the nature and quantity used of the carrier material, products with a very wide range of properties and applications can be prepared. If desired, the carrier material can be wholly or partly removed from the product at the end of the polymerization by treating the product with a solvent in which the carrier material is soluble but the prepared polymer is insoluble.

In the gas phase polymerization according to the invention, a polymer whose structure and composition corresponds substantially to that of the polymer to be prepared is preferably used as carrier material for the catalyst. Polymers prepared both by liquid phase polymerization and by gas phase polymerization are eligible for this purpose.

In this patent application, Group VIII metals are understood to be the noble metals ruthenium, rhodium, palladium, osmium, iridium and platinum, as well as the iron group metals iron, cobalt and nickel. In the process according to the invention, catalysts containing a Group VIII metal selected from palladium, nickel and cobalt are preferably used. Palladium is particularly preferred as Group VIII metal. The incorporation of the Group VIII metal in the catalyst preferably takes place in the form of a salt of a carboxylic acid, in particular in the form of an acetate.

The catalysts used in the process according to the invention should contain a Lewis acid/Brönsted acid mixture as component b). These mixtures preferably contain 0.1-10 and in particular 0.5-5 mol Brönsted acid per mol Lewis acid. Examples of suitable Lewis acids are the following chlorides: tin dichloride, aluminium trichloride, boron trichloride, silicon tetrachloride, germanium tetrachloride, antimony pentachloride and phosphorus pentachloride. In addition, the following bromides, among others, are suitable as Lewis acid: aluminium tribromide, boron tribromide, gallium tribromide, germanium tetrabromide and phosphorus pentabromide. Finally, the following fluorides, among others, are suitable as Lewis acid: mercury difluoride, aluminium trifluoride, boron trifluoride, gallium trifluoride, indium trifluoride, silicon tetrafluoride, germanium tetrafluoride, titanium tetrafluoride, antimony pentafluoride, arsenic pentafluoride, tantalum pentafluoride, niobium pentafluoride and phosphorus pentafluoride. In the Lewis acid/Brönsted acid mixtures, the Lewis acid is preferably a fluoride and in particular a fluoride selected from boron trifluoride, titanium tetrafluoride, phosphorus pentafluoride and antimony pentafluoride. As examples of suitable Brönsted acids, hydrochloric acid, hydrobromic acid, hydrofluoric acid, fluorosulphurous acid and sulphuric acid can be mentioned. In the Lewis acid/Brönsted acid mixtures, the Brönsted acid is preferably hydrofluoric acid. Catalysts with high polymerization activity were prepared, inter alia, by incorporating therein tetrafluoroboric acid (which may be seen as a 1:1 mixture of boron trifluoride and hydrofluoric acid), hexafluorotitanic acid (2HF.TiF₄), hexafluorophosphoric acid (HF.PF₅) or hexafluoroantimonic acid (HF.SbF₅) as the component b). Component b) is preferably present in the catalysts in such a quantity that they contain 0.5 to 200 and in particular 1.0 to 100 mol of the Lewis acid per g.atom Group VIII metal.

In addition to components a) and b), the catalyst used in the process according to the invention should include as component c) a dentate ligand containing at least two phosphorus-, nitrogen- or sulphur-containing dentate groups whereby the dentate ligand can complex with the Group VIII metal. Although dentate ligands containing more than two dentate groups are also eligible for this purpose, such as the tetradentate ligand 1,8-bis[bis-(2-methoxyphenyl)phosphino]-2,7-bis-[bis(2-methoxyphenyl)phosphinomethyl]octane, bidentate ligands are preferred.

If as component c) in the catalysts a bidentate ligand is used which via two sulphur-containing dentate groups present therein can complex with the Group VIII metal, a component c) is preferred of the general formula R¹S-R-SR¹ in which R¹ represents an optionally polar substituted hydrocarbyl group and R represents a divalent organic bridging group containing at least two carbon atoms in the bridge. Examples of such compounds are 1,2-bis(ethylthio)ethane, cis-1,2-bis-(benzylthio)ethene and 1,2-bis(phenylthio)propane.

If as component c) in the catalysts a bidentate ligand is used which via two nitrogen-containing dentate groups present therein can complex with the Group VIII metal, a component c) is preferred of the general formula 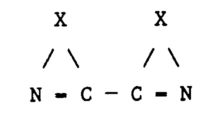 in which X represents an organic bridging group containing three or four atoms in the bridge, of which at least two are carbon atoms. Examples of such compounds are 2,2'-dipyridyl and 1,10-phenanthroline.

Preferably, as component c) in the catalysts a bidentate ligand is used which via two phosphorus-containing dentate groups present therein can complex with the Group VIII metal. If such a bidentate ligand is used as component c), a compound of the general formula (R¹)₂P-R-P(R¹)₂ is preferred in which R and R¹ have the previously indicated meanings. In that case, there is particular preference for a compound in which R¹ represents an aryl group having at the ortho position relative to the phosphorus atom to which it is linked an alkoxy group as substituent and in which R contains three atoms in the bridge. An example of such a compound is 1,3-bis[bis(2-methoxyphenyl)phosphino]propane.

If as component c) in the catalysts a bidentate ligand is used which via two sulphur- or nitrogen-containing dentate groups present therein can complex with the Group VIII metal, the quantity employed is preferably 0.5-100 and in particular 1-50 mol per g.atom Group VIII metal. If as component c) in the catalysts a bidentate ligand is used which via two phosphorus-containing dentate groups present therein can complex with the Group VIII metal, the quantity employed is preferably 0.5-2 and in particular 0.75-1.5 mol per g.atom Group VIII metal.

To enhance the activity of the catalysts, an organic oxidizing agent can also be incorporated therein as component d). Aromatic nitro compounds such as nitrobenzene are very suitable for this purpose. The quantity of organic oxidizing agent used is preferably 5-5000 and in particular 10-1000 mol per g.atom Group VIII metal.

As olefinically unsaturated compounds which according to the invention can be polymerized with carbon monoxide, compounds are eligible which consist exclusively of carbon and hydrogen, as well as compounds which besides carbon and hydrogen also contain one or more heteroatoms. The process according to the invention is preferably used for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process according to the invention is in particular very suitable for use in the preparation of copolymers of carbon monoxide with ethene and in the preparation of terpolymers of carbon monoxide with ethene and an α-olefin, in particular propene.

The quantity of catalyst used in the process according to the invention can vary within wide limits. Per mol olefinically unsaturated compound to be polymerized, a quantity of catalyst is preferably used which contains 10⁻⁷ to 10⁻³ and in particular 10⁻⁶ to 10⁻⁴ g.atom Group VIII metal.

The polymerization is preferably carried out at a temperature of 25-150 °C and a pressure of 2-150 bar and in particular at a temperature of 30-130 °C and a pressure of 5-100 bar. The molar ratio of the olefinically unsaturated compounds relative to carbon monoxide is preferably 10:1 to 1:10 and in particular 5:1 to 1:5. The polymer preparation according to the invention can be carried out either batchwise or continuously.

The invention is illustrated further by the following examples.

### Example 1

A carbon monoxide/ethene copolymer was prepared as follows. A catalyst was prepared by absorbing a catalyst solution containing
1.5 ml methanol,
0.5 ml tetrahydrofuran,
0.0095 mmol palladium acetate,
0.024 mmol tetrafluoroboric acid, and
0.0104 mmol 1,3-bis[bis(2-methoxyphenyl)phosphino]propane on 8 g of a linear alternating carbon monoxide/ethene copolymer. The catalyst thus prepared was introduced into a stirred autoclave with a volume of 300 ml. After the air in the autoclave had been displaced by nitrogen, the autoclave contents were brought to 85°C and a 1:1 carbon monoxide/ethene mixture was forced in until a pressure of 50 bar was reached. Finally, hydrogen was forced in until a pressure of 55 bar was reached. During the polymerization the pressure was maintained at 55 bar by forcing in a 1:1 carbon monoxide/ethene mixture. After 10 hours the polymerization was terminated by cooling the reaction mixture to room temperature and releasing the pressure.

80.1 g copolymer was obtained. The polymerization rate was 7.1 kg copolymer/(g palladium.hour).

### Example 2

A carbon monoxide/ethene copolymer was prepared in substantially the same way as in example 1, but with the following differences:
a) the catalyst solution contained 0.19 mmol tetrafluoroboric acid instead of 0.024 mmol, and
b) the reaction time was 4.3 hours instead of 10 hours.

30.2 g copolymer was obtained. The polymerization rate was 5.1 kg copolymer/(g palladium.hour).

### Example 3

A carbon monoxide/ethene copolymer was prepared in substantially the same way as in example 1, but with the following differences:
a) the catalyst solution contained 0.014 mmol hexafluorotitanic acid instead of tetrafluoroboric acid,
b) the reaction temperature was 82 °C instead of 85 °C, and
c) the reaction time was 4.3 hours instead of 10 hours.

34.1 g copolymer was obtained. The polymerization rate was 5.9 kg copolymer/(g palladium.hour).

### Example 4

A carbon monoxide/ethene copolymer was prepared in substantially the same way as in example 1, but with the following differences:
a) the catalyst solution contained 0.19 mmol hexafluorotitanic acid instead of tetrafluoroboric acid, and
b) the reaction time was 4.2 hours instead of 10 hours.

27.0 g copolymer was obtained. The polymerization rate was 4.5 kg copolymer/(g palladium.hour).

### Example 5

A carbon monoxide/ethene copolymer was prepared in substantially the same way as in example 1, but with the following differences:
a) the catalyst solution contained 0.028 mmol hexafluorophosphoric acid instead of tetrafluoroboric acid, and
b) the reaction time was 4.5 hours instead of 10 hours.

28.4 g copolymer was obtained. The polymerization rate was 6.1 kg copolymer/(g palladium.hour).

### Example 6

A carbon monoxide/ethene copolymer was prepared in substantially the same way as in example 1, but with the following differences:
a) the catalyst solution contained 0.024 mmol hexafluoroantimonic acid instead of tetrafluoroboric acid, and
b) the reaction time was 5.4 hours instead of 10 hours.

32.4 g copolymer was obtained. The polymerization rate was 4.5 kg copolymer/(g palladium.hour).

### Example 7

A carbon monoxide/ethene copolymer was prepared in substantially the same way as in example 1, but with the following differences:
a) the catalyst solution contained 0.028 mmol methylsulphonic acid instead of tetrafluoroboric acid, and
b) the reaction time was 5 hours instead of 10 hours.

15.6 g copolymer was obtained. The polymerization rate was 1.5 kg copolymer/(g palladium.hour).

### Example 8

A carbon monoxide/ethene copolymer was prepared in substantially the same way as in example 1, but with the following differences:
a) the catalyst solution contained 0.19 mmol methylsulphonic acid instead of tetrafluoroboric acid, and
b) the reaction time was 4.8 hours instead of 10 hours.

10.9 g copolymer was obtained. The polymerization rate was 0.6 kg copolymer/(g palladium.hour).

### Example 9

A carbon monoxide/ethene copolymer was prepared in substantially the same way as in example 1, but with the following differences:
a) the catalyst solution contained 0.024 mmol para-toluenesulphonic acid instead of tetrafluoroboric acid, and
b) the reaction time was 4.6 hours instead of 10 hours.

16.8 g copolymer was obtained. The polymerization rate was 1.9 kg copolymer/(g palladium.hour).

### Example 10

A carbon monoxide/ethene copolymer was prepared in substantially the same way as in example 1, but with the following differences:
a) the catalyst solution contained 0.19 mmol para-toluenesulphonic acid instead of tetrafluoroboric acid, and
b) the reaction time was 4.6 hours instead of 10 hours.

8.3 g copolymer was obtained. The polymerization rate was 0.1 kg copolymer/(g palladium.hour).

### Example 11

A carbon monoxide/ethene copolymer was prepared as follows. Into a stirred autoclave with a volume of 300 ml a catalyst solution was introduced containing
50 ml methanol,
0.1 mmol palladium acetate,
0.2 mmol methylsulphonic acid, and
0.15 mmol 1,3-bis[bis(2-methoxyphenyl)phosphino]propane.
After the air in the autoclave had been displaced by nitrogen and the autoclave contents had been brought to 89°C, a 1:1 carbon monoxide/ethene mixture was forced in until a pressure of 55 bar was reached. During the polymerization the pressure was maintained at 55 bar by forcing in a 1:1 carbon monoxide/ethene mixture. After 2 hours the polymerization was terminated by cooling the reaction mixture to room temperature and releasing the pressure. The polymer was filtered off, washed with methanol and dried.

22.3 g copolymer was obtained. The polymerization rate was 10.5 kg copolymer/(g palladium.hour).

### Example 12

A carbon monoxide/ethene copolymer was prepared in substantially the same way as in example 11, but with the following differences:
a) the catalyst solution contained 0.19 mmol para-toluenesulphonic acid instead of methylsulphonic acid, and
b) the reaction temperature was 88 °C instead of 89 °C.

19.5 g copolymer was obtained. The polymerization rate was 9.7 kg copolymer/(g palladium.hour).

Of the examples 1-12, examples 1-6 are according to the invention. In these examples, catalysts were used for the gas phase polymerization which contained a Lewis acid/Brönsted acid mixture as component b). Examples 7-12 fall outside the scope of the invention. They have been included in the patent application for comparison. Examples 7-12 relate to the use of catalysts containing a strong organic acid as component b). In examples 7-10 gas phase polymerization was applied. Examples 11-12 relate to liquid phase polymerization.

Comparison of the results of examples 1-6 with those of examples 7-10 shows the gain in the polymerization rate which occurs if in the gas phase preparation of the polymers a strong organic acid in the catalyst is replaced by a Lewis acid/Brönsted acid mixture according to the invention.

Comparison of the results of examples 7 and 9 with those of examples 11 and 12 shows clearly the large influence that the polymerization method (gas phase or liquid phase) has on the polymerization activity of catalysts containing a strong organic acid as component b).

It was established by NMR analysis that the polymers prepared according to examples 1-12 were built up of linear chains in which the units from carbon monoxide and the units from ethene occurred in an alternating manner.

## Claims

1. Process for the preparation of polymers of carbon monoxide with one or more olefinically unsaturated compounds in which polymers the units from carbon monoxide and the units from the olefinically unsaturated compounds are present in a substantially alternating arrangement, characterized by contacting the monomers at elevated temperature and pressure and substantially in the absence of a liquid non-polymerizable diluent with a catalyst comprising:
a) a Group VIII metal compound,
b) a Lewis acid/Brönsted acid mixture, and
c) a dentate ligand containing at least two phosphorus-, nitrogen-or sulphur-containing dentate groups whereby the dentate ligand can complex with the Group VIII metal.

2. Process according to claim 1, characterized in that component b) of the catalyst contains 0.1-10 mol Brönsted acid per mol Lewis acid.

3. Process according to claim 1 or 2, characterized in that the Lewis acid in component b) of the catalyst is a fluoride.

4. Process according to claim 3, characterized in that the Lewis acid in component b) of the catalyst is selected from boron trifluoride, titanium tetrafluoride, phosphorus pentafluoride and antimony pentafluoride.

5. Process according to one or more of claims 1-4, characterized in that the Brönsted acid in component b) of the catalyst is hydrofluoric acid.

6. Process according to claim 5, characterized in that component b) of the catalyst is selected from tetrafluoroboric acid, hexafluorotitanic acid, hexafluorophosphoric acid and hexafluoroantimonic acid.

7. Process according to one or more of claims 1-6, characterized in that component b) is present in the catalyst in such a quantity that the catalyst contains 0.5-200 mol of the Lewis acid per g.atom Group VIII metal.

8. Process according to one or more of claims 1-7, characterized in that the catalyst contains as component c) a compound of the general formula (R¹)₂P-R-P(R¹)₂ in which R¹ represents an optionally polar substituted hydrocarbyl group and R represents a divalent organic bridging group containing at least two carbon atoms in the bridge, in a quantity of 0.5-2 mol per g.atom Group VIII metal.

9. Process according to one or more of claims 1-8, characterized in that per mol of olefinically unsaturated compound to be polymerized a quantity of catalyst is used which contains 10⁻⁷-10⁻³ g.atom Group VIII metal, and that it is carried out at a temperature of 25-150 °C, a pressure of 2-150 bar and a molar ratio of the olefinically unsaturated compounds relative to carbon monoxide of 10:1 to 1:10.

## Patentansprüche

1. Verfahren zur Herstellung von Polymeren aus Kohlenmonoxid und einer oder mehreren olefinisch ungesättigten Verbindungen, in welchen Polymeren die Einheiten aus Kohlenmonoxid und die Einheiten aus den olefinisch ungesättigten Verbindungen in einer im wesentlichen alternierenden Anordnung vorliegen, dadurch gekennzeichnet, daß die Monomere bei erhöhter Temperatur und erhöhtem Druck und im wesentlichen in Abwesenheit eines flüssigen, nichtpolymerisierbaren Verdünnungsmittels mit einem Katalysator in Kontakt gebracht werden, der
a) eine Gruppe VIII-Metallverbindung,
b) ein Lewis-Säure/Brönsted-Säure-Gemisch und
c) einen Dentatliganden umfaßt, der wenigstens zwei phosphor-, stickstoff- oder schwefelhältige Dentatgruppen enthält, wodurch der Dentatligand mit dem Gruppe VIII-Metall komplexieren kann.

2. Verfahren nach Anspruch 1, dadurch gekennzeichnet, daß die Komponente b) der Katalysators 0,1 bis 10 Mol Brönstedsäure je Mol Lewissäure enthält.

3. Verfahren nach Anspruch 1 oder 2, dadurch gekennzeichnet, daß die Lewissäure in Komponente b) des Katalysators ein Fluorid ist.

4. Verfahren nach Anspruch 3, dadurch gekennzeichnet, daß die Lewissäure in Komponente b) des Katalysators unter Bortrifluorid, Titantetrafluorid, Phosphorpentafluorid und Antimonpentafluorid ausgewählt ist.

5. Verfahren nach einem oder mehreren der Ansprüche 1 bis 4, dadurch gekennzeichnet, daß die Brönstedsäure in Komponente b) der Katalysators Fluorwasserstoffsäure ist.

6. Verfahren nach Anspruch 5, dadurch gekennzeichnet, daß die Komponente b) des Katalysators unter Tetrafluorborsäure, Hexafluortitansäure, Hexafluorphosphorsäure und Hexafluorantimonsäure ausgewählt ist.

7. Verfahren nach einem oder mehreren der Ansprüche 1 bis 6, dadurch gekennzeichnet, daß die Komponente b) in dem Katalysator in einer solchen Menge vorliegt, daß der Katalysator 0,5 bis 200 Mol Lewissäure je Grammatom Gruppe VIII-Metall enthält.

8. Verfahren nach einem oder mehreren der Ansprüche 1 bis 7, dadurch gekennzeichnet, daß der Katalysator als Komponente c) eine Verbindung der allgmeinen Formel (R¹)₂P-R-P(R¹)₂ enthält, worin R¹ eine gegebenenfalls polar substituierte Hydrocarbylgruppe bedeutet und R eine zweiwertige organische Brückengruppe darstellt, die wenigstens zwei Kohlenstoffatome in der Brücke enthält, in einer Menge von 0,5 bis 2 Mol je Grammatom Gruppe VIII-Metall.

9. Verfahren nach einem oder mehreren der Ansprüche 1 bis 8, dadurch gekennzeichnet, daß pro Mol olefinisch ungesättigter, zu polymerisierender Verbindung eine Katalysatormenge verwendet wird, die 10⁻⁷ bis 10⁻³ Grammaton Gruppe VIII-Metall enthält und daß es bei einer Temperatur von 25 bis 150°C, einem Druck von 2 bis 150 bar und einem Molverhältnis der olefinisch ungesättigten Verbindungen zu Kohlenmonoxid von 10:1 bis 1:10 ausgeführt wird.

## Revendications

1. Procédé de préparation de polymères du monoxyde de carbone et d'un ou plusieurs composés oléfiniquement insaturés, polymères dans lesquels les unités qui tirent leur origine du monoxyde de carbone et les unités qui tirent leur origine de composés oléfiniquement insaturés sont présentes en un agencement sensiblement altemant, caractérisé en ce que l'on met les monomères en contact, à température et à pression élevées et sensiblement en l'absence d'un diluant liquide non polymérisable, avec un catalyseur qui comprend :
a) un composé d'un métal du groupe VIII,
b) un mélange d'acide de Lewis et d'acide de Brönsted et
c) un ligand dentate contenant au moins deux groupes dentate contenant du phosphore, de l'azote ou du soufre, si bien que le ligand dentate peut se complexer au métal du groupe VIII.

2. Procédé suivant la revendication 1, caractérisé en ce que le composant b) du catalyseur contient de 0,1 à 10 moles d'acide de Brönsted par mole d'acide de Lewis.

3. Procédé suivant la revendication 1 ou 2, caractérisé en ce que l'acide de Lewis dans le composant b) du catalyseur est un fluorure.

4. Procédé suivant la revendication 3, caractérisé en ce que l'acide de Lewis dans le composant b) du catalyseur est choisi parmi le trifluorure de bore, le tétrafluorure de titane, le pentafluorure de phosphore et le pentafluorure d'antimoine.

5. Procédé suivant une ou plusieurs des revendications 1 à 4, caractérisé en ce que l'acide de Brönsted dans le composant b) du catalyseur est l'acide fluorhydrique.

6. Procédé suivant la revendication 5, caractérisé en ce que le composant b) du catalyseur est choisi parmi l'acide tétrafluoroborique, l'acide hexafluorotitanique, l'acide hexafluorophosphorique et l'acide hexafluoroantimonique.

7. Procédé suivant une ou plusieurs des revendications 1 à 6, caractérisé en ce que le composant b) est présent dans le catalyseur en une proportion telle que le catalyseur contienne de 0,5 à 200 moles d'acide de Lewis par atome-gramme de métal du groupe VIII.

8. Procédé suivant une ou plusieurs des revendications 1 à 7, caractérisé en ce que le catalyseur contient, à titre de composant c), un composé de la formule générale (R¹)₂P-R-P(R¹)₂ dans laquelle R¹ représente un groupe hydrocarbyle à substitution polaire éventuelle et R représente un groupe de pontage organique divalent contenant au moins deux atomes de carbone dans le pont, en une proportion de 0,5 à 2 moles par atome-gramme de métal du groupe VIII.

9. Procédé suivant une ou plusieurs des revendications 1 à 8, caractérisé en ce que, par mole de composé oléfiniquement insaturé à polymériser, on utilise une quantité de catalyseur qui contient de 10⁻⁷ à 10⁻³ atome-gramme de métal du groupe VIII et en ce qu'on l'entreprend à une température de 25 à 150°C, sous une pression de 2 à 150 bars et avec un rapport molaire des composés oléfiniquement insaturés au monoxyde de carbone de 10:1 à 1:10.
